# EUROPÄISCHE PATENTSCHRIFT

(11) **EP 0 805 104 B1**
(45) Veröffentlichungstag und Bekanntmachung des Hinweises auf die Patenterteilung: **09.04.2003**
(21) Anmeldenummer: 97102747.9
(22) Anmeldetag: 20.02.1997
(51) Int. Cl.: B62M 25/02

(54) **Gehäuse für einen Betätigungszug zum Schalten der Gangstufen eines Fahrradgetriebes**
Housing for a central control device cable of a multispeed bicycle transmission
Logement pour un câble de commande pour un changement de vitesse pour une bicyclette

(30) Priorität: 03.05.1996 DE 29608010 U
(43) Veröffentlichungstag der Anmeldung: 05.11.1997
(73) Patentinhaber: SRAM Deutschland GmbH, 97424 Schweinfurt (DE)
(72) Erfinder: Meier-Burkamp, Gerhard, Dipl.-Ing. (FH), 97493 Bergrheinfeld (DE); Kühne, Karl-Joachim, Dipl.-Ing. (FH), 97464 Niederwerrn (DE); Karch, Alois, 97714 Oerlenbach (DE); Bodmer, Ulrike, Dipl.-Ing. (FH), 97422 Schweinfurt (DE)

(56) Entgegenhaltungen:
- EP-A- 0 661 204
- DE-A- 3 203 197
- US-A- 4 052 914

## Beschreibung

Die Erfindung betrifft ein Gehäuse für einen Betätigungszug zum Schalten der Gangstufen eines Fahrradgetriebes, insbesondere einer Fahrradnabe mit einem Schaltrad gemäß dem Oberbegriff des Anspruchs 1. Èin solches Gehäuse ist aus DE-A-32 03 197 bekannt.

Gemäß der DE 41 42 867 A1 wird eine geschlossene Vorrichtung mit mehreren Drehzahlstufen zum Einsatz bei einem Fahrrad gezeigt, dessen Antriebsteil ein Schaltteil enthält, welches auf einer drehfesten Welle angebracht ist und einen Schaltseilmitnehmer zum Erfassen eines Nippels eines Schaltseils enthält. Ein solches Schaltseil wird üblicherweise von einem Handgriff durch den Fahrer betätigt und läuft in Form eines Bowdenzuges im Inneren einer Schaltseilhülle zum Schaltseilmitnehmer, wobei die Schaltseilhülle an einer fixen Stelle vor dem Schaltseilmitnehmer gegengehalten werden muß. Ein Gegenhalter für die Seilhülle wird üblicherweise an der Kettenstrebe des Rahmens des Fahrrades befestigt, er kann auch aus einem Hebel bestehen, welcher mit der feststehenden Welle verbunden ist und an seinem Ende einen Gegenhalter aufweist. Alle denkbaren Lösungen jedoch sind nicht geeignet, zusätzlich zu der Funktion des Gegenhaltens der Hülse auch die Abdeckung gegen Schmutzeinwirkung oder aber noch zusätzlich die Aufnahme eines Federspeichers im Schaltseil zur Überbrückung von temporären Schaltwiderständen aufzunehmen.

Es ist daher die Aufgabe der Erfindung, ein gegen Schmutzeinwirkung geeignetes kostengünstiges Gehäuse zur Aufnahme eines Schaltzuges zur Betätigung eines Schaltrades an Getriebenaben zu schaffen, das gleichzeitig zur Gegenhaltung einer den Schaltzug umgebenden Seilhülle, zur Aufnahme eines Federspeichers zur Überbrückung von temporären Schaltstößen im Schaltseil und zusätzlich zum Anbau an beliebig geformte Fahrradrahmen geeignet ist.

Die Lösung der Aufgabe wird in den Ansprüchen beschrieben.

Eine Ausführungsbeispiel eines Gehäuses für einen Betätigungszug zum Schalten der Gangstufen einer Getriebenabe wird in Zeichnungen und Skizzen beschrieben.
Es zeigen:

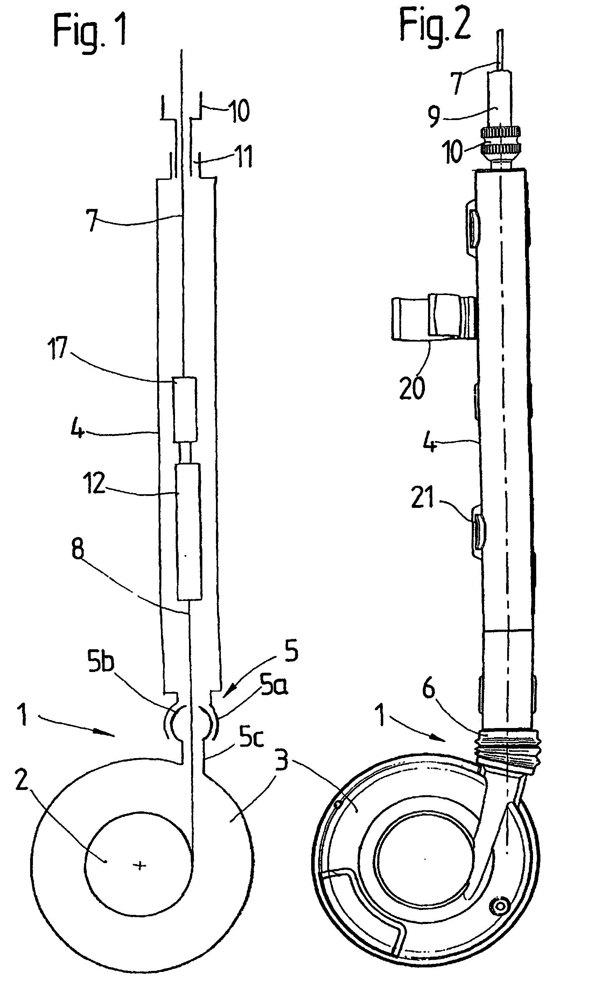

- Fig. 1: ein aus einem Antriebsgehäuse und einem Gehäusefortsatz zusammengestelltes Gehäuse um ein Schaltrad und einen Schaltzug als Funktionsskizze;
- Fig. 2: eine Ansicht des Gehäuses gemäß Fig. 1;
- Fig. 3: ein im Gehäuse angeordneter Federspeicher mit einer Kupplung;
- Fig. 4: den Gehäusefortsatz, bestehend aus einer ersten und einer zweiten Gehäuseschale.

Wird mit 1 ein Gehäuse für einen Schaltzug 7 zum Schalten der Gangstufen einer Getriebenabe für ein Fahrrad bezeichnet, so besteht dieses aus einem Antriebsgehäuse 3 und einem Gehäusefortsatz 4. Während das Antriebsgehäuse 3 um ein Schaltrad 2 der Getriebenabe herum angeordnet und dort fixiert ist, ist der Gehäusefortsatz über ein Gelenk 5 am Antriebsgehäuse 3 beweglich gelagert, wobei ein Seilzug 8, der am Schaltrad 2 befestigt ist, durch eine Seilführung 5c mit einem Federspeicher 12 in Verbindung steht, der gemeinsam mit einer Kupplung 17 im Gehäusefortsatz untergebracht ist. Mit der Kupplung 17 wird über eine Klemmeinrichtung 18 und einer Klemmschraube 19 der Schaltzug 7 mit dem Federspeicher 12 und somit mit dem Seilzug 8 verbunden, womit eine mechanische Steuerleitung zu einer hier nicht dargestellten Handbetätigung für den Fahrer des Fahrrades an der Lenkstange hergestellt wäre. Der Schaltzug 7 verläßt den Gehäusefortsatz 4 durch eine Einstellschraube 10 in einem Gewinde 11, wobei sich eine Seilhülle 9 gegen die Einstellschraube 10 abstützt. Die als Gegenhalter für die Seilhülle 9 gedachte Einstellschraube 10 kann durch Drehung im Gewinde 11 derart verstellt werden, daß der Schaltzug in seiner Länge relativ zur Seilhülle 9 einstellbar wird.

Das Gelenk 5 zwischen dem Antriebsgehäuse 3 und dem Gehäusefortsatz 4 ist als Kugelgelenk mit einer äußeren Lagerschale 5a und einer inneren Lagerschale 5b ausgebildet, so daß der Schaltzug am Fahrrad, beispielsweise an einer Kettenstrebe des Hinterbaus des Fahrradrahmens, derart verlegt werden kann, daß das Antriebsgehäuse bei der Montage der Nabe bereits grob fixiert wird, während unter Inanspruchnahme einer gewissen Auslenkung durch das Gelenk 5 der Gehäusefortsatz 4 nach Befestigung des Schaltzuges 7 sich in dessen Zugrichtung einstellt.

Gegen das Eindringen von Schmutz im Bereich des Gelenkes 5 ist eine Manschette 6 vorgesehen, die den Ausgang des Antriebsgehäuses wie auch den Eingang zum Gehäusefortsatz umfaßt. Da der Gehäusefortsatz 4 aus fertigungstechnischen Gründen aus einer ersten Gehäuseschale 4a und einer zweiten Gehäuseschale 4b besteht, die miteinander über mindestens eine Formschlußverbindung 21 zusammengehalten werden, ist es von Vorteil, daß die Manschette 6 diese Teile zusammenhalten und abdichten hilft. Als weiteren Vorteil kann die Tatsache gewertet werden, daß alle Gehäuseteile 3,4a und 4b aus Kunststoff gefertigt sind, da die Herstellungsmethoden von Kunststoff eine Vielfalt von Formgebungsmöglichkeiten erlauben. Wie bereits erwähnt, nimmt der Gehäusefortsatz 4 den Seilzug 8, den Federspeicher 12 mit der Kupplung 17 und den daran angeschlossenen Schaltzug 7 auf, wobei der Federspeicher 12 aus einem Außenrohr 13, welches über einen Nippel 16 mit dem Seilzug 8 verbunden ist, einer Feder 14 und einem Innenrohr 15 besteht, welches mit der Klemmeinrichtung 18 der Kupplung 17 in Verbindung steht. Wenn nun beim Schalten eine Zugkraft durch den Schaltzug 7 auf den Federspeicher 12 geleitet wird, so wird die Kraft unmittelbar an den Seilzug 8 weitergegeben, der das Schaltrad 2 bewegt. Im Falle von Schaltwiderständen innerhalb der Getriebenabe könnte es möglich seien, daß das Schaltrad 2 vorübergehend blockiert ist, der Schaltzug 7 aber vom Fahrradfahrer betätigt wird. In diesem Fall bewegen sich das Innenrohr 15 und das Außenrohr 13 gegeneinander und spannen die Feder 14 solange vor, bis der Widerstand in der Getriebenabe abgebaut ist und das Schaltrad 2 einer Bewegung des Seilzuges 8 folgen kann. Beim Entspannen der Feder wird die Schaltung des gewünschten Ganges zeitlich verschoben eingeleitet.

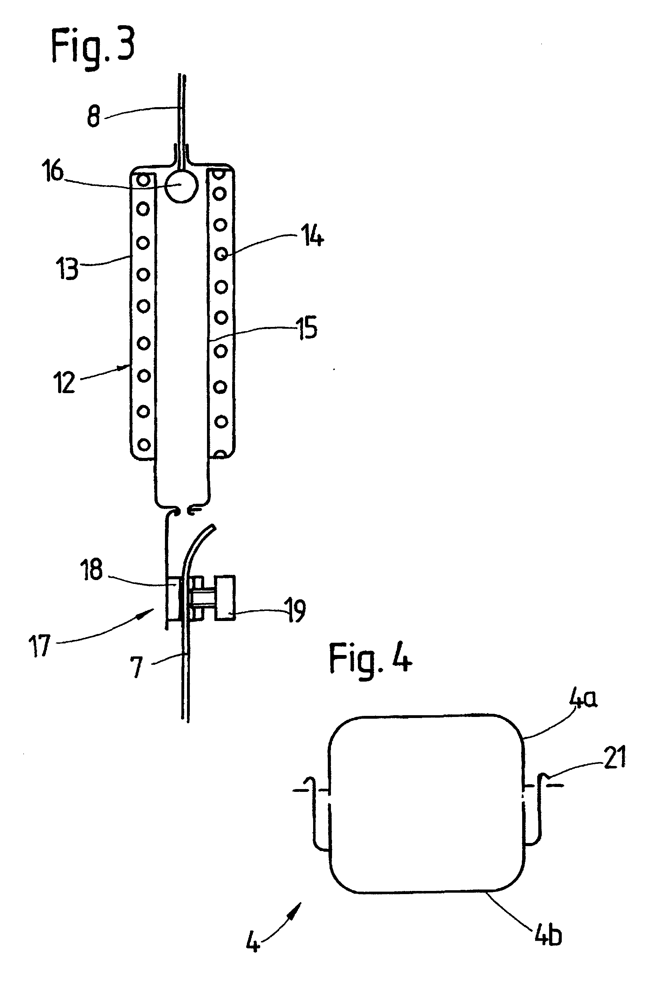

In Fig. 4 wird gezeigt, wie der Gehäusefortsatz 4 von der ersten Gehäuseschale 4a und der zweiten Gehäuseschale 4b gebildet wird. Zwei Formschlußverbindungen 21 halten die Gehäuseschalen 4a und 4b in ihrer gegenseitigen Position fest. An einer der beiden Gehäuseschalen 4a oder 4b kann eine Befestigung 20 angeordnet sein, mit Hilfe derer der Gehäusefortsatz 4 an einer Strebe des Hinterbaus des Fahrrades zur Vermeidung von Klappergeräuschen befestigt sein kann.

## Patentansprüche

1. Gehäuse (1) für die Aufnahme eines Betätigungszuges (7) zum Anbau an eine Fahrradgetriebe, insbesondere an eine Mehrgangnabe im Hinterrad mit einem Schaltrad (2), das koaxial zur Nabenachse an einem Ende der Nabe angeordnet ist und über eine Fernbedienung mit einem vom Fahrer während der Fahrt bedienbaren Steuerorgan in Verbindung steht, wobei die Fernbedienung über einen Bowdenzug, bestehend aus einem Seilzug (8) und einer Seilhülle (9), die sich über eine Einstellschraube (10) am Gehäusefortsatz (4) abstützt,
**dadurch gekennzeichnet,**
**daß** das Gehäuse (1) ein Antriebsgehäuse (3) zur Abdeckung des Schaltrades (2) und einen rohrförmigen Gehäusefortsatz (4) zur Aufnahme des Seilzuges (8) und eine Betätigungszuges (7) aufweist, wobei das Antriebsgehäuse (3) mit dem Gehäusefortsatz (4) über eine Gelenk (5) mit einer Seilführung (5c) verbunden ist, während im Gehäusefortsatz (4) ein Federspeicher (12) und eine Kupplung (17) untergebracht sein können.

2. Gehäuse nach Anspruch 1,
**dadurch gekennzeichnet,**
**daß** der Gehäusefortsatz (4) aus einer ersten Gehäuseschale (4a) und einer zweiten Gehäuseschale (4b) besteht, wobei die Gehäuseschalen (4a,4b) miteinander über mindestens eine Formschlußverbindung (21) verbunden sind.

3. Gehäuse nach einem der Ansprüche 1 oder 2,
**dadurch gekennzeichnet,**
**daß** die erste Gehäuseschale (4a) und die zweite Gehäuseschale (4b) mit ihren Enden eine äußere Lagerschale (5a) bilden, die eine am Antriebsgehäuse (3) angeformte innere Lagerstelle (5b) umschließt.

4. Gehäuse nach Anspruch 3,
**dadurch gekennzeichnet,**
**daß** das Gelenk (5) mit einer Manschette (6) abgedeckt ist.

5. Gehäuse nach einem der Ansprüche 1 bis 4,
**dadurch gekennzeichnet,**
**daß** mindestens eines der Teile des Gehäuses (1), nämlich die erste Gehäuseschale (4a), die zweite Gehäuseschale (4b) sowie das Antriebsgehäuse (3) aus Kunststoff bestehen.

## Claims

1. Housing (1) for accommodating an actuating cable (7) for attaching to a bicycle transmission, in particular to a multi-speed hub in the rear wheel having a shift gear (2) which is arranged coaxially to the hub axis on one end of the hub and is connected via a remote control means to a control member which can be operated by the cyclist during travel, the remote control means [lacuna] via a Bowden cable, consisting of a cable control (8) and a cable ferrule (9) which is supported on the housing extension (4) via an adjusting screw (10), **characterized in that** the housing (1) has a drive housing (3) for covering the shift gear (2) and a tubular housing extension (4) for accommodating the cable control (8), and an actuating cable (7), the drive housing (3) being connected to the housing extension (4) via a joint (5) with a cable guide (5c), whereas a spring energy store (12) and a coupling (17) can be accommodated in the housing extension (4).

2. Housing according to Claim 1, **characterized in that** the housing extension (4) consists of a first housing shell (4a) and a second housing shell (4b), the housing shells (4a, 4b) being connected to one another via at least one positive-locking connection (21).

3. Housing according to either of Claims 1 and 2, **characterized in that** the first housing shell (4a) and the second housing shell (4b), with their ends, form an outer bearing shell (5a) which encloses an inner bearing shell (5b) integrally formed on the drive housing (3).

4. Housing according to Claim 3, **characterized in that** the joint (5) is covered with a sleeve (6).

5. Housing according to one of Claims 1 to 4, **characterized in that** at least one of the parts of the housing (1), namely the first housing shell (4a), the second housing shell (4b) and the drive housing (3) are made of plastic.

## Revendications

1. Logement (1) destiné à recevoir un câble de commande (7) à monter sur un engrenage de bicyclette, en particulier sur un moyeu à plusieurs vitesses dans la roue arrière avec un pignon de changement de vitesse (2), qui est monté coaxialement à l'axe du moyeu à une extrémité du moyeu et qui est en liaison par l'intermédiaire d'une commande à distance avec un organe de commande pouvant être actionné par le conducteur pendant la marche, dans lequel la commande à distance agit par l'intermédiaire d'un câble Bowden, se composant d'un câble de traction (8) et d'une gaine de câble (9), qui s'appuie par une vis de réglage (10) sur le prolongement de logement (4), **caractérisé en ce que** le logement (1) présente un boîtier d'entraînement (3) destiné à recouvrir le pignon de changement de vitesse (2) et un prolongement tubulaire du logement (4) destiné à recevoir le câble de traction (8) et un câble de commande (7), dans lequel le boîtier d'entraînement (3) avec le prolongement de logement (4) est assemblé à un guide de câble (5c) par l'intermédiaire d'une articulation (5), tandis qu'un ressort d'accumulation (12) et un accouplement (17) peuvent être installés dans le prolongement de logement (4).

2. Logement suivant la revendication 1, **caractérisé en ce que** le prolongement de logement (4) se compose d'une première coquille de logement (4a) et d'une seconde coquille de logement (4b), les coquilles de logement (4a, 4b) étant assemblées l'une à l'autre par au moins un assemblage à emboîtement (21).

3. Logement suivant l'une des revendications 1 ou 2, **caractérisé en ce que** la première coquille de logement (4a) et la seconde coquille de logement (4b) forment avec leurs extrémités une coquille d'appui extérieure (5a), qui entoure un point d'appui intérieur (5b) formé sur le boîtier d'entraînement (3).

4. Logement suivant la revendication 3, **caractérisé en ce que** l'articulation (5) est masquée avec une manchette (6).

5. Logement suivant l'une quelconque des revendications 1 à 4, **caractérisé en ce qu'**au moins une des pièces du logement (1), à savoir la première coquille de logement (4a), la seconde coquille de logement (4b) ainsi que le boîtier d'entraînement (3), sont constituées de matière plastique.
